(19) Europäisches Patentamt
European Patent Office
Office européen des brevets

(11) **EP 3 467 730 A1**

(12) **EUROPEAN PATENT APPLICATION**
published in accordance with Art. 153(4) EPC

(43) Date of publication:
**10.04.2019 Bulletin 2019/15**

(51) Int Cl.:
**G06Q 10/06** (2012.01)

(21) Application number: **17809698.8**

(22) Date of filing: **06.06.2017**

(86) International application number:
**PCT/CN2017/087261**

(87) International publication number:
**WO 2017/211259 (14.12.2017 Gazette 2017/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.06.2016 CN 201610396866**

(71) Applicant: **Tencent Technology (Shenzhen)
Company Limited
Shenzhen, Guangdong 518057 (CN)**

(72) Inventors:
• **CHEN, Peixuan
Shenzhen City
Guangdong 518057 (CN)**
• **CHEN, Qian
Shenzhen City
Guangdong 518057 (CN)**
• **LI, Lin
Shenzhen City
Guangdong 518057 (CN)**
• **LIU, Zhibin
Shenzhen City
Guangdong 518057 (CN)**

(74) Representative: **Gunzelmann, Rainer
Wuesthoff & Wuesthoff
Patentanwälte PartG mbB
Schweigerstraße 2
81541 München (DE)**

(54) **METHOD AND APPARATUS FOR OPTIMIZING USER CREDIT SCORE**

(57) Embodiments of this application disclose an optimization method and apparatus for a credit score of a user. The method includes: obtaining initial credit scores of users in multiple social user sets; obtaining initial credit scores of the social user sets according to the initial credit scores of the users in the social user sets; determining a social relationship between each two social user sets; optimizing and adjusting, according to a credit score of at least one social user set having a social relationship with a target social user set and the social relationship between the at least one social user set and the target social user set, a credit score of the target social user set; and credit scores of the users in the target social user set according to the optimized and adjusted credit score of the target social user set.

Obtain initial credit scores of users in multiple social user sets — S101

Obtain initial credit scores of the social user sets according to the initial credit scores of the users in the social user sets — S102

Determine a social relationship between each two social user sets according to a social relationship between the users in the each two social user sets — S103

Optimize and adjust, according to a credit score of at least one social user set having a social relationship with a target social user set and the social relationship between the at least one social user set and the target social user set, a credit score of the target social user set — S104

Correct credit scores of the users in the target social user set according to the optimized and adjusted credit score of the target social user set — S105

FIG. 1

**Description**

RELATED APPLICATION

This application claims priority to Chinese Patent Application No. 201610396866.8, entitled "OPTIMIZATION METHOD AND APPARATUS FOR CREDIT SCORE OF USER" filed with the Patent Office of China on June 6, 2016, which is incorporated by reference in its entirety.

FIELD OF THE TECHNOLOGY

This application relates to the field of Internet technologies, and in particular, to an optimization method and apparatus for a credit score of a user.

BACKGROUND OF THE DISCLOSURE

As Internet technologies rapidly develop in recent years, people process an increasing number of various data services by using the Internet, and a credit assessment of a user also becomes a focus problem in the field of Internet technologies.

In the existing technology, generally, in a credit rating method for a user, personal information of the user is collected, and then a default risk of the user is predicted by using a statistical model or some prediction algorithms of machine learning, for example, a frequently-used FICO credit score system and a Zestfinace credit rating system. In an existing credit score mechanism, only information of dimensions of the user is used. If the personal information of the user is collected incompletely or mistakenly, it is very difficult to implement accurate credit rating for the user.

SUMMARY

In view of this, embodiments of this application provide an optimization method and apparatus for a credit score of a user, to effectively increase the accuracy of the credit score of the user.

To resolve the foregoing technical problem, an embodiment of this application provides an optimization method for a credit score of a user, the method including:

obtaining initial credit scores of users in multiple social user sets;

obtaining initial credit scores of the social user sets according to the initial credit scores of the users in the social user sets;

determining a social relationship between each two social user sets according to a social relationship between the users in the each two social user sets;

optimizing and adjusting, according to a credit score of at least one social user set having a social relationship with a target social user set and the social relationship between the at least one social user set and the target social user set, a credit score of the target social user set; and

correcting credit scores of the users in the target social user set according to the optimized and adjusted credit score of the target social user set.

Correspondingly, an embodiment of this application further provides an optimization apparatus for a credit score of a user, the apparatus including at least a processor and a memory, the memory storing a user score obtaining module, a set score obtaining module, a set relationship obtaining module, a set score optimization module, and a user score correction module, and when being executed by the processor:

the user score obtaining module being configured to obtain initial credit scores of users in multiple social user sets;

the set score obtaining module being configured to obtain initial credit scores of the social user sets according to the initial credit scores of the users in the social user sets;

the set relationship obtaining module being configured to determining a social relationship between each two social user sets according to a social relationship between the users in the each two social user sets;

the set score optimization module being configured to: optimize and adjust, according to a credit score of at least one social user set having a social relationship with a target social user set and the social relationship between the at least one social user set and the target social user set, a credit score of the target social user set; and

the user score correction module being configured to correct credit scores of the users in the target social user set according to the optimized and adjusted credit score of the target social user set.

BRIEF DESCRIPTION OF THE DRAWINGS

To describe the technical solutions in the embodiments of this application or in the existing technology more clearly, the following briefly describes the accompanying drawings required for describing the embodiments or the existing technology. Apparently, the accompanying drawings in the following description show merely some embodiments of this application, and a person of ordinary skill in the art may still derive other drawings from these accompanying drawings without creative efforts.

FIG. 1 is a schematic flowchart of an optimization method for a credit score of a user according to an embodiment of this application;

FIG. 2 is a schematic diagram of layered processing of a social relationship of a user according to an embodiment of this application;

FIG. 3 is a schematic flowchart of performing optimization and iteration on a credit score of a social user set according to an embodiment of this application;

FIG. 4 is a schematic flowchart of an optimization method for a credit score of a user according to another embodiment of this application;

FIG. 5 is a schematic flowchart of performing optimization and iteration on a credit score of a user in a target social user set according to an embodiment of this application;

FIG. 6 is a schematic structural diagram of an optimization apparatus for a credit score of a user according to an embodiment of this application;

FIG. 7 is a schematic structural diagram of a set score optimization module according to an embodiment of this application;

FIG. 8 is a schematic structural diagram of a user score optimization module according to an embodiment of this application; and

FIG. 9 is a block diagram of a hardware structure of an optimization apparatus for a credit score of a user according to an embodiment of this application.

DESCRIPTION OF EMBODIMENTS

The following clearly and completely describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application without creative efforts shall fall within the protection scope of this application.

The optimization method and apparatus of a credit score of a user in the embodiments of this application may be implemented in a computer system, such as a personal computer, a notebook computer, a smartphone, a tablet computer, or an e-reader. The following provides descriptions by using the optimization apparatus for a credit score of a user as an execution body of the embodiments of this application.

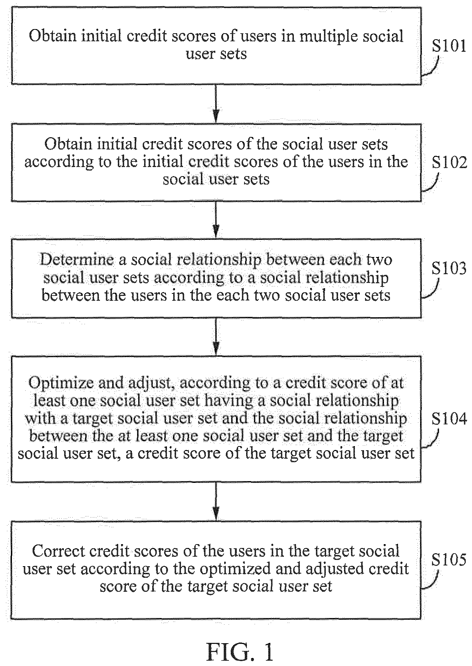

FIG. 1 is a schematic flowchart of an optimization method for a credit score of a user according to an embodiment of this application. As shown in the figure, in this embodiment, the optimization method for a credit score of a user may include the following procedure.

S101: Obtain initial credit scores of users in multiple social user sets.

Specifically, the initial credit scores of the users in the multiple social user sets may be imported into the optimization apparatus for a credit score of a user; alternatively, the optimization apparatus for a credit score of a user may obtain personal information of the users, and perform credit scoring according to the personal information of the users and a specific predictive model, to obtain the initial credit scores of the users in the multiple social user sets; alternatively, the optimization apparatus for a credit score of a user may obtain optimized credit scores of the users by implementing this application, and use the optimized credit scores as the initial credit scores of the users in the multiple social user sets. For example, when current credit scores are optimized, credit scores of the users that are obtained in a previous optimization may be used as initial credit scores in this optimization. The optimizing the credit scores of the users may be manually triggered by an administrator, or may be triggered according to an updating cycle or according to an event of adding a new user or social user set.

In an embodiment, if an initial credit score of a user is missing, an average score or a weighted average score of credit scores of users who are social friends, colleagues, and relatives may be used as the initial credit score of the user. A weighted value may be determined according to an intimacy degree between a user and the user or according to a frequency of a social event occurring between a user and the user.

The multiple social user sets may be sets of the users participating in different social groups. Users participating in a same social group belong to a social user set corresponding to the social group. Alternatively, the multiple social user sets may be obtained by performing division according to specific attributes of the users, for example, interests or geographical locations of the users. In a preferred embodiment, in the social user sets, a same user does not exist, that is, a user belong to only a social user set.

S102: Obtain initial credit scores of the social user sets according to the initial credit scores of the users in the social user sets.

In a specific implementation, an average score or a weighted average score of the initial credit scores of the users in a social user set may be used as an initial credit score of the social user set. That is,

$$S_i = \sum_{j=1}^{n_i} s_j \, / \, n_i$$

or

$$S_i = \sum_{j=1}^{n_i} a_j s_j \, / \, n_i \, ,$$

where $S_i$ is an initial credit score of a social user set, $s_j$ is an initial credit score of a $j^{th}$ user in the social user set, $n_i$ is the quantity of users in the social user set, and $a_j$ is a weighted value of the $j^{th}$ user for a credit score of the social user set.

A weighted value of each user may be determined according to a social relationship between the user and a user in the social user set. For example, a user have four social friends in a social user set (six persons in total), and the weighted value may be 4/(6-1)=0.8, and so on. Alternatively, a weighted value of a user for a credit score of a social user set may be determined according to a frequency of a social event occurring between the user and a user in the social user set. Alternatively, a weighted value of a user for the credit score of a social user set to which the user belongs may be jointly determined in combination with the foregoing two manners.

S103: Determine a social relationship between each two social user sets according to a social relationship between the users in the each two social user sets.

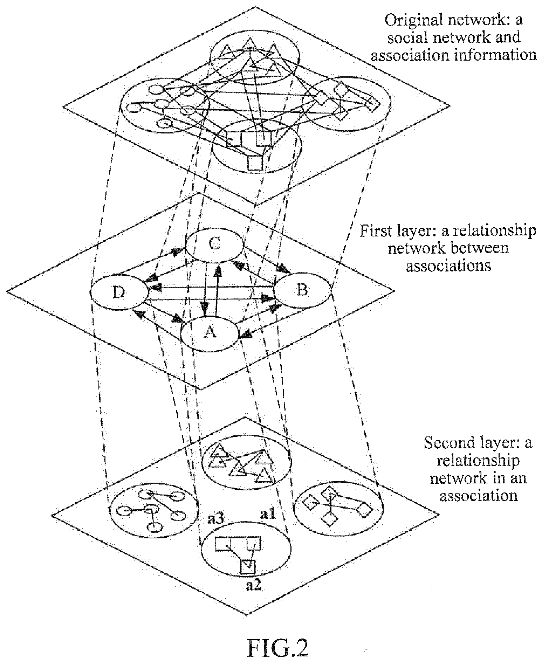

The optimization apparatus for a credit score of a user in this embodiment of this application may determine a social relationship between two social user sets according to social relationships between the users separately belonging to the two social user sets. For example, if a first user belonging to a first social user set has a social friend in a second social user set, a social relationship exists between the first social user set and the second social user set. Then, an intimacy degree of the social relationship between the two social user sets may be quantified. For example, the intimacy degree of the social relationship between the two social user sets may be quantified according to the quantity of users that are in the two social user sets and that are social friends of each other (the quantity of users or the quantity of social relationship pairs). The intimacy degree may be consistent, that is, a bi-directional intimacy degree between the two social user sets is quantified, or may be inconsistent, that is, a unidirectional intimacy degree between the two social user sets is quantified. For example, social user sets (also referred to as associations) A, B, C, and D are obtained by means of layered processing of social relationships between users that is shown in FIG. 2. The quantity of users that are in the social user set A and that have social friends in the social user set B is determined, and a result of dividing the quantity of users having the social friends in the social user set B by a total quantity of users in the social user set A as a social intimacy degree of the social user set A with the social user set B. On the contrary, a result of dividing the quantity of users having social friends in the social user set A by a total quantity of users in the social user set B as a social intimacy degree of the social user set B with the social user set A. A bi-directional intimacy degree between the social user set A and the social user set B may be further calculated according to the social intimacy degree of the social user set A with the social user set B in combination with the social intimacy degree of the social user set B with the social user set A. Subsequently, a social weight between the two social user sets may also be determined according to the intimacy degree of the social relationship between the two social user sets that is obtained by means of quantification. That is, when a credit score of a target social user set is calculated, a weighted value of a credit score of the other social user set having the social relationship with the target social user set is considered. If a social relationship between two social user sets is more intimate, a probability that credit scores of the two social user sets are similar is higher. In other words, a credit score of the intimate social user set of the target social user set likely reflects the credit score of the target social user set. Therefore, when the credit score of the target social user set is optimized and adjusted, an impact factor (a reference weight) of the credit score of the intimate social user set should be set to a larger value.

In the layered processing of the social relationships shown in FIG. 2, social relationships between associations of a middle layer are obtained by performing processing according to cross-association (social user set) social relationships of users in original social relationships of an upper layer, and social relationships between users in an association are reserved as social relationships of the users in a lower-layer association.

S104: Optimize and adjust, according to a credit score of at least one social user set having a social relationship with a target social user set and the social relationship between the at least one social user set and the target social user set, a credit score of the target social user set.

According to step S103, the social relationship between each two social user set is obtained. It may be considered that, the two social user sets having the social relationship may affect each other, or credit scores of the two social user sets having the social relationship may be used as reference of each other. Therefore, the optimization apparatus for a credit score of a user may optimize and adjust the credit score of the target social user set according to credit scores of all other social user sets having social relationships with the target social user set, to effectively avoid inaccurate credit score of the target social user set caused by that information of the user is collected incompletely or mistakenly. For example, an average value of the credit scores of the other social user sets having the social relationships with the target social user set as the optimized and adjusted credit score of the target social user set, or any value between an average value of the credit scores of the other social user sets having the social relationships with the target social user set and the initial credit score of the target social user set as the optimized and adjusted credit score of the target social user set.

Then, in an embodiment, the optimization apparatus for a credit score of a user may determine a social weight between each social user set and the target social user set according to the social relationship between the social user set and the target social user set, and optimize and adjust, according to the social weight between the at least one social user set and the target social user set and the credit score of the corresponding social user set, the credit score of the target social user set. That is, the social weight between each social user set and the target social user set is determined according to the intimacy degree that is between the target social user set and each of the other social user sets and that is quantified by performing S103, and then the credit score of the target social user set is optimized and adjust according to the credit score of each social user set having the social relationship with the target social user set and the social weight between the social user set and the target social user set, for example, $Q_i = \sum_{k \in Nb(i)} e_{ki} * Q_k$ ,

where $Q_i$ is the credit score of the target social user set, $Q_k$ is a credit score of $k^{th}$ social user set having a social relationship with the target social user set, $e_{ki}$ is the social weight between the $k^{th}$ social user set and the target social user set, and $\sum_{k \in Nb(i)} e_{ki} * Q_k$ represents a sum of products of a credit score of each social user set having a social relationship with the target social user set and the social weight between the corresponding social user set and the target social user set. This implementation is especially applicable to a situation in which a new target social user set is added while other social user sets are all optimized and adjust. Only the target social user set is separately optimized and adjust without optimizing and adjusting other social user sets again.

The social weight between each of the social user sets and the target social user set may be obtained according to a ratio of users having social associated users in the social user sets to all users in the target social user set. For example, a same manner of S103 in which the intimacy degree of the social relationship between the two social user sets is quantified is applied.

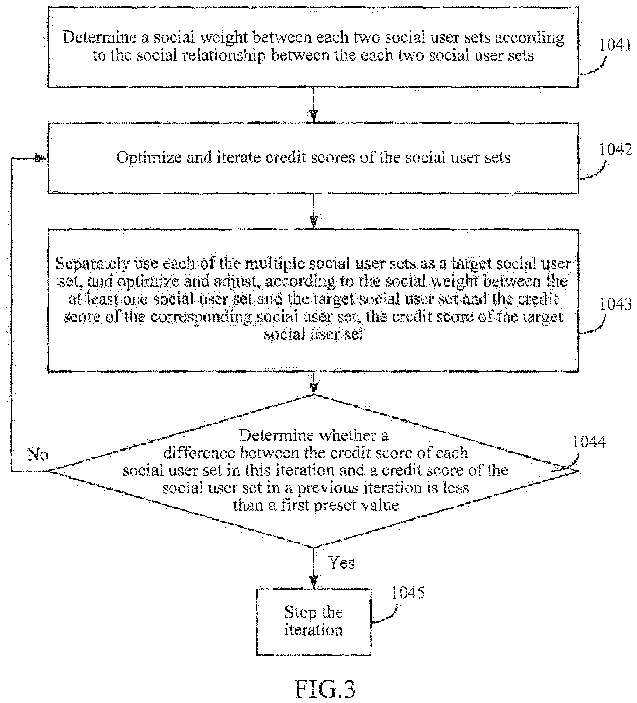

In another embodiment, the optimization method for a credit score of a user may optimize and iterate, according to a credit score of at least one social user set having a social relationship with the target social user set and the social relationship between the at least one social user set and the target social user set, a credit score of a social user set. A specific iteration procedure may be shown in FIG. 3.

S105: Correct credit scores of the users in the target social user set according to the optimized and adjusted credit score of the target social user set.

Specifically, the optimization apparatus for a credit score of a user may correct the credit score of a user in the target social user set to any value between the initial credit score of the corresponding user and the optimized and adjusted credit score of the target social user set. For example, if information of a user in the target social user set is missing or goes wrong, the optimization apparatus for a credit score of a user may use the optimized and adjusted credit score of the target social user set as the corrected credit score of the user.

In an embodiment, the optimization apparatus for a credit score of a user may correct the credit scores of the users in the target social user set according to an adjustment value for optimizing and adjusting the credit score of the target social user set. For example, the credit scores of the users in the target social user set are corrected by using the following formula: $s'_j = s_j + (Q_i - S_i)$, where $Q_i$ is the optimized and adjusted credit score of the target social user set, $S_i$ is the initial credit score of the target social user set, $s_j$ is the initial credit score of a $j^{th}$ user in the target social user set, and $s'_j$ is the corrected credit score of the $j^{th}$ user in the target social user set.

The optimization apparatus for a credit score of a user may correct a corresponding ratio of the credit scores of the users in the target social user set according to an adjustment ratio for optimizing and adjusting the credit score of the target social user set.

Then, in an embodiment, the optimization apparatus for a credit score of a user may push product information for a user according to the corrected credit score of the corresponding user that is obtained by performing the steps in this embodiment, for example, push financial product information or fixed assets management product information; or monitor and manage a data service of a user according to the credit score of the corresponding user, for example, perform risk management on a loan service of the corresponding user, or propose a suggestion on management of current funds of the user.

FIG. 3 is a schematic flowchart of optimizing and iterating a credit score of a social user set according to an embodiment of this application. As shown in FIG. 3, the optimization and iteration process in this implementation may include the following steps.

S1041: Determine a social weight between each two social user sets according to the social relationship between the each two social user sets.

The social weight between each social user set and a target social user set may be determined according to a ratio of users each having a social associated user in the social user sets to the users in the target social user set. For example, social user sets (also referred to as associations) A, B, C, and D are obtained by means of layered processing of social relationships between users that is shown in FIG. 2. The quantity of users that are in the social user set A and that having social friends in the social user set B is determined, and a result of dividing the quantity of users having the social friends in the social user set B by a total quantity of users in the social user set A as the social weight of the social user set A with the social user set B. For example, a1 and a2 in the social user set A each have a social friend in the social user set B, and a total quantity of the users in the social user set A is 3, so the social weight of the social user set A with the social user set B may be 2/3. That is, when a credit score of the social user set A is optimized, a social weight of a credit score of the social user set B is 2/3. On the other hand, a result of dividing the quantity of users having social friends in the social user set A by a total quantity of users in the social user set B as a social intimacy degree of the social user set B with the social user set A. For example, two users in the social user set B also each have a social friend in the social user set A, and a total quantity of the users in the social user set B is 4, so the social weight of the social user set B with the social user set A may be 2/4=0.5. That is, when a credit score of the social user set B is optimized, a social weight of a credit score of the social user set A is 0.5.

S1042: Optimize and iterate the credit scores of the social user sets.

S1043: Separately use each of the multiple social user sets as a target social user set, and optimize and adjust, according to the social weight between the at least one social user set and the target social user set and the credit score of the corresponding social user set, the credit score of the target social user set.

That is, in each iteration, the credit score of each of the multiple social user sets is optimized and adjusted by using the following formula: $Q_i^{(r)} = \alpha + (1-\alpha) \sum_{k \in Nb(i)} e_{ki} * Q_k^{(r-1)}$ where $Q_i^{(r)}$ is the credit score of an i$^{th}$ social user set in an r$^{th}$ round of iteration, $Q_k^{(r-1)}$ is the credit score of a social user set having the social relationship with the i$^{th}$ social user set in a (r-1)$^{th}$ round of iteration, $e_{ki}$ is the social weight between the social user set having the social relationship with the i$^{th}$ social user set and the i$^{th}$ social user set, $\sum_{k \in Nb(i)} e_{ki} * Q_k^{(r-1)}$ represents

a sum of all products of the credit score of each social user set having the social relationship with the i$^{th}$ social user set and the social weight between the corresponding social user set and the i$^{th}$ social user set, and $\alpha$ is a preset damping factor.

S1044: Determine whether an absolute value of a difference between the credit score of each social user set in this iteration and a credit score of the social user set in a previous iteration is less than a first preset value, that is $\forall i$,

$|Q_i^{(r)} - Q_i^{(r-1)}| < \beta$, and the formula is satisfied, perform S1045, otherwise perform S1042, that is, perform a next iteration.

S1045: Stop the iteration, and the credit score of each social user set obtained by means of iteration is the credit score of the social user set obtained by means of optimization and adjustment.

It should be noted that the foregoing descriptions are only an example of an iteration algorithm. An algorithm for iterating the credit score of the social user set in this application should not be considered to be limited to the algorithm, and other algorithms such as a heat conduction network iteration algorithm may be applicable.

After the optimization apparatus for a credit score of a user in this embodiment calculates a credit score of a social user set to which the user belongs and performs optimization and adjustment, the apparatus corrects credit score of the user in the social user set according to the credit score of the social user set obtained by means of optimization and adjustment, to optimize the credit score of the user in combination with information of the social user set. Calculating the credit score of the user is no longer according to only personal information of the user, so that the accuracy of the credit score of the user can be effectively increased.

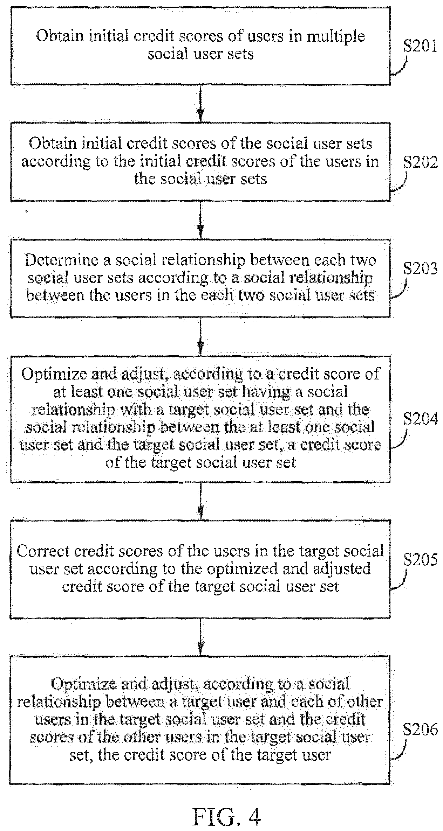

FIG. 4 is a schematic flowchart of an optimization method for a credit score of a user according to another embodiment of this application. As shown in the figure, in this embodiment, the optimization method for a credit score of a user may include the following procedure.

S201: Obtain initial credit scores of users in multiple social user sets.

S202: Obtain initial credit scores of the social user sets according to the initial credit scores of the users in the social user sets.

S203: Determine a social relationship between each two social user sets according to a social relationship between the users in the each two social user sets.

S204: Optimize and adjust, according to a credit score of at least one social user set having a social relationship with a target social user set and the social relationship between the at least one social user set and the target social user set, a credit score of the target social user set.

S205: Correct credit scores of the users in the target social user set according to the optimized and adjusted credit score of the target social user set.

S201 to S205 in this embodiment are the same as S101 to S105 in the previous embodiment, and details are not described again. A difference between this embodiment and the previous embodiment is that, after the credit scores of the users in the target social user set are corrected according to the optimized and adjusted credit score of the target social user set, a credit score of a user in the target social user set is further optimized and adjusted.

S206: Optimize and adjust, according to a social relationship between a target user and each of other users in the target social user set and the credit scores of the other users in the target social user set, the credit score of the target user.

Social relationships between users in a lower-layer association are obtained by means of layered processing of social relationships that is shown in FIG. 2, for example, social relationships between users a1, a2, and a3 in a social user set A. In an embodiment, a reason for dividing the users a1, a2, and a3 into the social user set A may be excluded. For example, the users a1, a2, and a3 are divided into the social user set A according to a same social group in which the three users participate, and when the social relationships between the users a1, a2, and a3 are considered, information that the users a1, a2, and a3 participate in a same social group may be ignored, and the social relationships between the users a1, a2, and a3 may be determined based on a factor, for example, whether a social friend relationship is established between the three users, whether the three users have a common interest, whether the three users participate in a social event at the same time, or whether the three users are located in a same geographical location.

If two users in a same social user set have a social relationship, it may be considered that the two users having the social relationship affect each other, or credit scores of the two users having the social relationship may be used as reference of each other. Therefore, an optimization apparatus for a credit score of a user may optimize and adjust the credit score of the target user according to a credit score of another user that belongs to a same social user set and that has a social relationship with the target user, thereby effectively avoiding a problem of inaccurate credit score of the target user caused by that information of the user is collected incompletely or mistakenly. For example, an average value of the credit scores of all other users having the social relationships with the target user is directly used as the optimized and adjusted credit score of the target user, or any value between an average value of the credit scores of all other users having the social relationships with the target user and the initial credit score of the target user is used as the optimized and adjusted credit score of the target user.

Then, in an embodiment, the optimization apparatus for a credit score of a user may determine, according to the social relationship between the target user and each of the other users in a same social user set, a social weight between the other user and the target user, and then optimize and adjust, according to the social weight between each of the other users belonging to the same social user set and the target user and a credit score of the corresponding user, the credit score of the target user. The social weight may be a result of quantifying an intimacy degree of a social relationship between two users. For example, the intimacy degree of the social relationship between the two users is quantified by calculating the quantity of common social friends of the two users, a social group in which the two users jointly participate, a social event in which the two users jointly participate, a frequency of a social event occurring between the two users, or the like, to obtain the social weight between the two users. If the social relationship between the two users is closer, a probability that the credit scores of the two users are similar is higher. In other words, a credit score of an intimate user of the target user likely reflects the credit score of the target user. Therefore, when the credit score of the target user is optimized and adjusted, an impact factor (a reference weight) of the credit score of the intimate user of the target user should be set to a larger value. The credit score of the target social user set is optimized and adjusted according to the credit score of each of the other users in the target social user set and the social weight between the user and the target user, for example, $q_i = \sum_{k \in Nb(i)} w_{ki} * q_k$ where $q_i$ is the credit score of the target user,

$q_k$ is the credit score of a kth user having the social relationship with the target user, $w_{ki}$ is the social weight between the kth user and the target user, and $\sum_{k \in Nb(i)} w_{ki} * q_k$ represents a sum of all products of the credit score of each user that is in the target social user set and that has the social relationship with the target user and the social weight between the corresponding user and the target user. This implementation is especially applicable to a situation in which a new target user is added to the target social user set while other users are all optimized and adjusted, so that only target user is separately optimized and adjusted without optimizing and adjusting other users in the target social user set again.

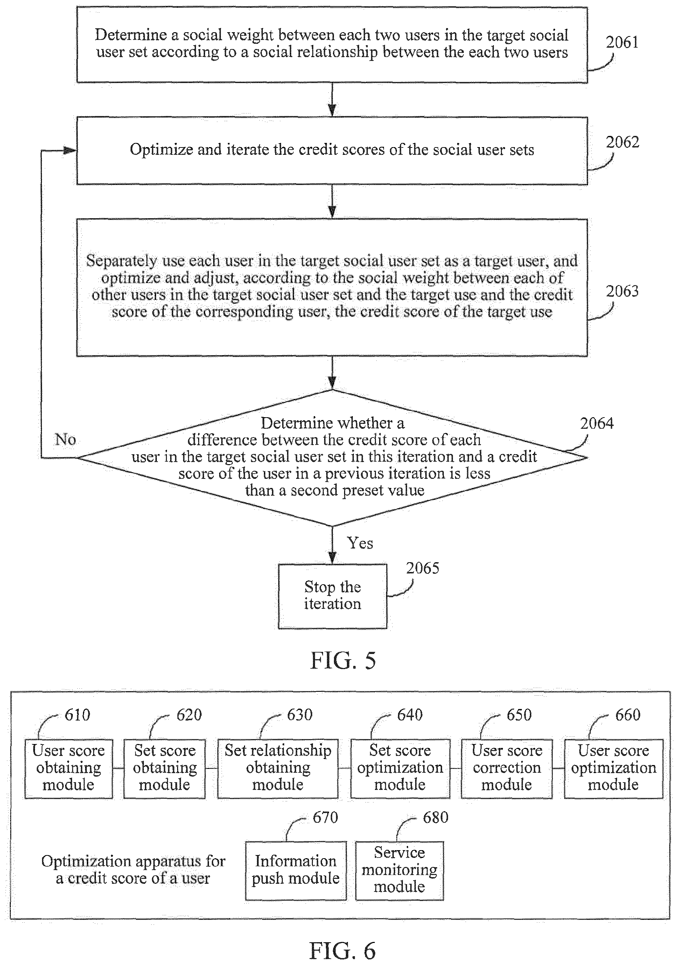

In another embodiment, the optimization apparatus for a credit score of a user may optimize and iterate, according to the credit scores of the users in a social user set and a social relationship between the users in the social user set, the credit score of a user in the social user set; and in each iteration, separately use each social user in the target social user set as the target user, and optimize and adjust, according to the social weight between each of the other users in the target social user set and the target user and the credit score of the corresponding user, the credit score of the target user, and stop the iteration when a difference between the credit score of each user in the target social user set in this iteration and a credit score of the user in a previous iteration is less than a second preset value, so that an obtained credit score of the user is the credit score obtained by means of optimization and adjustment. A specific iteration procedure may be shown in FIG. 5, and includes the following steps.

S2061: Determine a social weight between each two users in the target social user set according to a social relationship between the each two users.

A social weight between any two users in a same social user set may be determined according to a social relationship between the two users. The social weight may be a result of quantifying an intimacy degree of a social relationship between two users, For example, the intimacy degree of the social relationship between the two users is quantified by calculating the quantity of common social friends of the two users, a social group in which the two users jointly participate, a social event in which the two users jointly participate, a frequency of a social event occurring between the two users, or the like, to obtain the social weight between the two users.

S2062: Optimize and iterate the credit scores of the social user sets.

S2063: Separately use each of the multiple social user sets as a target social user set, and optimize and adjust, according to the social weight between the at least one social user set and the target social user set and the credit score of the corresponding social user set, the credit score of the target social user set.

That is, in each iteration, the credit score of each user in the target social user set is optimized and adjusted by using the following formula: $q_i^{(r)} = \lambda + (1-\lambda) \sum_{k \in Nb(i)} w_{ki} * q_k^{(r-1)}$, where $q_i^{(r)}$ is the credit score of an i$^{th}$ user in an r$^{th}$ round of iteration, $q_k^{(r-1)}$ is the credit score of a user having the social relationship with the i$^{th}$ user in the target social user set in a (r-1)$^{th}$ round of iteration, $w_{ki}$ is the social weight between the user having the social relationship with the i$^{th}$ user in the target social user set and the i$^{th}$ user, $\sum_{k \in Nb(i)} w_{ki} * q_k^{(r-1)}$ represents a sum of all products of the credit score of each user having the social relationship with the i$^{th}$ user in the target social user set and the social weight between the corresponding user and the i$^{th}$ user, and $\lambda$ is a preset damping factor.

S2064: Determine whether an absolute value of a difference between the credit score of each user in the target social user set in this iteration and a credit score of the user in a previous iteration is less than a first preset value, that is, $\forall i, |q_i^{(r)} - q_i^{(r-1)}| < \gamma$, and the formula is satisfied, perform S2065, otherwise perform S2062, that is, perform a next iteration.

S2065: Stop the iteration, and the credit score of each social user set obtained by means of iteration is the credit score of the social user set obtained by means of optimization and adjustment.

It should be noted that the foregoing descriptions are only an example of an iteration algorithm. An algorithm for iterating the credit score of the social user set in this application should not be considered to be limited to the algorithm, and other algorithms such as a heat conduction network iteration algorithm may be applicable.

Then, in an embodiment, the optimization apparatus for a credit score of a user may push product information for a user according to the corrected credit score of the corresponding user that is obtained by performing the steps in this embodiment, for example, push financial product information or fixed assets management product information; or monitor and manage a data service of a user according to the credit score of the corresponding user, for example, perform risk management on a loan service of the corresponding user, or propose a suggestion on management of current funds of the user.

In this embodiment, after calculating a credit score of a social user set to which a user belongs and optimizing and adjusting the credit score of the social user set according to a social relationship between social user sets, the optimization apparatus for a credit score of a user corrects credit scores of users in the social user set according to the optimized and adjusted credit score of the social user set, and optimizes and adjusts the credit scores of the users in the social user set according to a social relationship between the users in the social user set, to optimize the credit scores of the users in combination of information of the social user set. Calculating the credit scores of the users is no longer according to only personal information of the users, so that the accuracy of the credit scores of the users can be effectively increased. Moreover, although the optimization process is performed twice, the two optimizations are separately based on the social relationship between the social user sets and the social relationship between users in the social user set, and in fact, this does not bring about a large calculation amount.

FIG. 6 is a schematic structural diagram of an optimization apparatus for a credit score of a user according to an embodiment of this application. As shown in the figure, in this embodiment, the optimization apparatus for a credit score of a user may include at least the following modules.

A user score obtaining module 610 is configured to obtain initial credit scores of users in multiple social user sets.

Specifically, the user score obtaining module 610 may obtain the initial credit scores of the users in the multiple social user sets by receiving imported data; alternatively, the user score obtaining module 610 may obtain personal information of the users, and perform credit scoring according to the personal information of the users and a specific predictive model, to obtain the initial credit scores of the users in the multiple social user sets; alternatively, the user score obtaining module 610 may obtain optimized credit scores of the users by implementing this application, and use the optimized credit scores as the initial credit scores of the users in the multiple social user sets. For example, when current credit scores are optimized, credit scores of the users that are obtained in a previous optimization may be used as initial credit scores in this optimization. The optimizing the credit scores of the users may be manually triggered by an administrator, or may be triggered according to an updating cycle or according to an event of adding a new user or social user set.

In an embodiment, if an initial credit score of a user is missing, the user score obtaining module 610 may use an average score or a weighted average score of credit scores of users who are social friends, colleagues, and relatives of the user as the initial credit score of the user. A weighted value may be determined according to an intimacy degree between a user and the user or according to a frequency of a social event occurring between a user and the user.

The multiple social user sets may be sets of the users participating in different social groups. Users participating in a same social group belong to a social user set corresponding to the social group. Alternatively, the multiple social user sets may be obtained by performing division according to specific attributes of the users, for example, interests or geographical locations of the users. In a preferred embodiment, in the social user sets, a same user does not exist, that is, a user belong to only a social user set.

A set score obtaining module 620 is configured to obtain initial credit scores of the social user sets according to the initial credit scores of the users in the social user sets.

In a specific implementation, the set score obtaining module 620 may use an average score or a weighted average score of the initial credit scores of the users in a social user set as an initial credit score of the social user set.

A weighted value of each user may be determined according to a social relationship between the user and a user in the social user set. For example, a user have four social friends in a social user set (six persons in total), and the weighted value may be 4/(6-1)=0.8, and so on. Alternatively, a weighted value of a user for a credit score of the social user set may be determined according to a frequency of a social event (for example, sending a session message or performing a video session) occurring between the user and a user in the social user set. Alternatively, a weighted value of a user for the credit score of a social user set to which the user belongs may be jointly determined in combination with the foregoing two manners.

A set relationship obtaining module 630 is configured to determining a social relationship between each two social user sets according to a social relationship between the users in the each two social user sets.

The set relationship obtaining module 630 may determine a social relationship between two social user sets according to social relationships between the users separately belonging to the two social user sets. For example, if a first user belonging to a first social user set has a social friend in a second social user set, a social relationship exists between the first social user set and the second social user set. Then, the set relationship obtaining module 630 may further quantify an intimacy degree of the social relationship between the two social user sets. For example, the intimacy degree of the social relationship between the two social user sets may be quantified according to the quantity of users that are in the two social user sets and that are social friends of each other (the quantity of users or the quantity of social relationship pairs). The intimacy degree may be consistent, that is, a bi-directional intimacy degree between the two social user sets is quantified, or may be inconsistent, that is, a unidirectional intimacy degree between the two social user sets is quantified. For example, social user sets (also referred to as associations) A, B, C, and D are obtained by means of layered processing of social relationships between users that is shown in FIG. 2. The quantity of users that are in the social user set A and that have social friends in the social user set B is determined, and a result of dividing the quantity of users having the social friends in the social user set B by a total quantity of users in the social user set A as a social intimacy degree of the social user set A with the social user set B. On the contrary, a result of dividing the quantity of users having social friends in the social user set A by a total quantity of users in the social user set B as a social intimacy degree of the social user set B with the social user set A. A bi-directional intimacy degree between the social user set A and the social user set B may be further calculated according to the social intimacy degree of the social user set A with the social user set B in combination with the social intimacy degree of the social user set B with the social user set A. Subsequently, a social weight between the two social user sets may also be determined according to the intimacy degree of the social relationship between the two social user sets that is obtained by means of quantification. That is, when a credit score of a target social user set is calculated, a weighted value of a credit score of the other social user set having the social relationship with the target social user set is considered. If a social relationship between two social user sets is more intimate, a probability that credit scores of the two social user sets are similar is higher. In other words, a credit score of the intimate social user set of the target social user set likely reflects the credit score of the target social user set. Therefore, when the credit score of the target social user set is optimized and adjusted, an impact factor (a reference weight) of the credit score of the intimate social user set should be set to a larger value.

In the layered processing of the social relationships shown in FIG. 2, social relationships between associations of a middle layer are obtained by performing processing according to cross-association (social user set) social relationships of users in original social relationships of an upper layer, and social relationships between users in an association are reserved as social relationships of the users in a lower-layer association.

A set score optimization module 640 is configured to: optimize and adjust, according to a credit score of at least one social user set having a social relationship with a target social user set and the social relationship between the at least one social user set and the target social user set, a credit score of the target social user set.

According to the social relationship between each two social user set that is obtained by the set relationship obtaining module 630, it may be considered that, the two social user sets having the social relationship may affect each other, or credit scores of the two social user sets having the social relationship may be used as reference of each other. Therefore, the set score optimization module 640 may optimize and adjust the credit score of the target social user set according to credit scores of all other social user sets having social relationships with the target social user set, to effectively avoid inaccurate credit score of the target social user set caused by that information of the user is collected incompletely or mistakenly. For example, the set score optimization module 640 may directly use an average value of the credit scores of the other social user sets having the social relationships with the target social user set as the optimized and adjusted credit score of the target social user set, or use any value between an average value of the credit scores of the other social user sets having the social relationships with the target social user set and the initial credit score of the target social user set as the optimized and adjusted credit score of the target social user set.

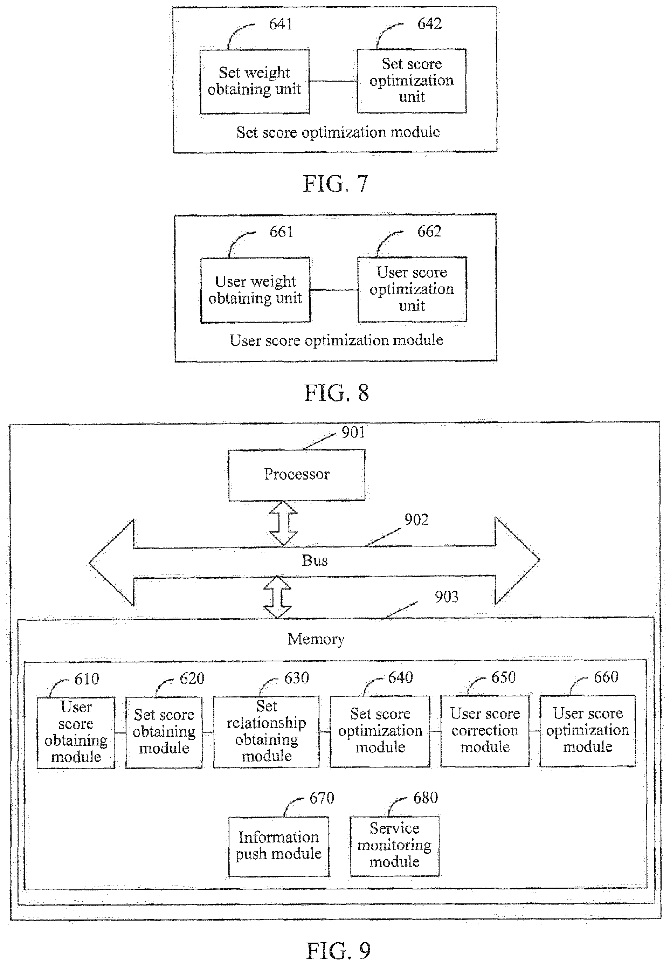

Then, in an embodiment, as shown in FIG. 7, the set score optimization module 640 further includes the following units.

A set weight obtaining unit 641 is configured to separately determine a social weight between each social user set and the target social user set according to the social relationship between the social user set and the target social user set. For example, the social weight between each social user set and the target social user set may be determined according to a ratio of users each having a social associated user in the social user sets to the users in the target social user set.

A set score optimization unit 642 is configured to: optimize and adjust, according to the social weight between the at least one social user set and the target social user set and the credit score of the corresponding social user set, the credit score of the target social user set.

That is, the social weight between each social user set and the target social user set is determined according to the intimacy degree that is between the target social user set and each of the other social user sets and that is obtained by means of quantification, and then the credit score of the target social user set is optimized and adjust according to the credit score of each social user set having the social relationship with the target social user set and the social weight between the social user set and the target social user set, for example, $Q_i = \sum_{k \in Nb(i)} e_{ki} * Q_k$ where $Q_i$ is

the credit score of the target social user set, $Q_k$ is a credit score of $k^{th}$ social user set having a social relationship with the target social user set, $e_{ki}$ is the social weight between the $k^{th}$ social user set and the target social user set, and

$\sum_{k \in Nb(i)} e_{ki} * Q_k$ represents a sum of products of a credit score of each social user set having a social relationship with the target social user set and the social weight between the corresponding social user set and the target social user set. This implementation is especially applicable to a situation in which a new target social user set is added while other social user sets are all optimized and adjust, so that the set score optimization module 640 may only optimize and adjust the target social user set separately without optimizing and adjusting other social user sets again.

In another embodiment, the set score optimization unit 642 may optimize and iterate, according to a credit score of at least one social user set having a social relationship with a target social user set and the social relationship between the at least one social user set and the target social user set, credit scores of the social user sets. A specific iteration procedure may be shown in FIG. 3, and specifically includes: optimizing and iterating the credit scores of the social user sets; and in each iteration, separately using each of the multiple social user sets as the target social user set, optimizing and adjusting, according to a social weight between the at least one social user set and the target social user set and the credit score of the corresponding social user set, the credit score of the target social user set, and stopping the iteration after a difference between the credit score of each of the multiple social user sets in this iteration and a credit score of the social user set in a previous iteration is less than a first preset value, so that an obtained credit score of the social user set is the credit score obtained by means of optimization and adjustment. For example, the set score optimization unit 642 iterates the credit score of each of the multiple social user sets by using the following formula:

$Q_i^{(r)} = \alpha + (1-\alpha) \sum_{k \in Nb(i)} e_{ki} * Q_k^{(r-1)}$ where $Q_i^{(r)}$ is the credit score of an $i^{th}$ social user set in an $r^{th}$ round of iteration, $Q_k^{(r-1)}$ is the credit score of a social user set having the social relationship with the $i^{th}$ social user set in a $(r-1)^{th}$ round of iteration, $e_{ki}$ is the social weight between the social user set having the social relationship with the $i^{th}$ social user set and the $i^{th}$ social user set, $\sum_{k \in Nb(i)} e_{ki} * Q_k^{(r-1)}$ represents a sum of all products of the credit score of each social user set having the social relationship with the $i^{th}$ social user set and the social weight between the corresponding social user set and the $i^{th}$ social user set, and $\alpha$ is a preset damping factor.

It should be noted that the foregoing descriptions are only an example of an iteration algorithm. An algorithm for iterating the credit score of the social user set in this application should not be considered to be limited to the algorithm, and other algorithms such as a heat conduction network iteration algorithm may be applicable.

A user score correction module 650 is configured to correct credit scores of the users in the target social user set according to the optimized and adjusted credit score of the target social user set.

Specifically, the user score correction module 650 may correct the credit score of a user in the target social user set to any value between the initial credit score of the corresponding user and the optimized and adjusted credit score of the target social user set. For example, if information of a user in the target social user set is missing or goes wrong, the user score correction module 650 may use the optimized and adjusted credit score of the target social user set as the corrected credit score of the user.

In an embodiment, the user score correction module 650 may correct the credit scores of the users in the target social user set according to an adjustment value for optimizing and adjusting the credit score of the target social user set. For example, the credit scores of the users in the target social user set are corrected by using the following formula:

$$s_j' = s_j + (Q_i - S_i)_,$$ where $Q_i$ is the optimized and adjusted credit score of the target social user set, $S_i$ is the initial credit score of the target social user set, $s_j$ is the initial credit score of a $j^{th}$ user in the target social user set, and $s_j'$ is the corrected credit score of the $j^{th}$ user in the target social user set.

The user score correction module 650 may alternatively correct a corresponding ratio of the credit scores of the users in the target social user set according to an adjustment ratio for optimizing and adjusting the credit score of the target social user set.

In an embodiment, the optimization apparatus for a credit score of a user may further include:
a user score optimization module 660, configured to: optimize and adjust, according to a social relationship between a target user and each of other users in the target social user set and the credit scores of the other users in the target social user set, the credit score of the target user.

Social relationships between users in a lower-layer association are obtained by means of layered processing of social relationships that is shown in FIG. 2, for example, social relationships between users a1, a2, and a3 in a social user set A. In an embodiment, a reason for dividing the users a1, a2, and a3 into the social user set A may be excluded. For example, the users a1, a2, and a3 are divided into the social user set A according to a same social group in which the three users participate, and when the social relationships between the users a1, a2, and a3 are considered, information that the users a1, a2, and a3 participate in a same social group may be ignored, and the social relationships between the users a1, a2, and a3 may be determined based on a factor, for example, whether a social friend relationship is established between the three users, whether the three users have a common interest, whether the three users participate in a social event at the same time, or whether the three users are located in a same geographical location.

If two users in a same social user set have a social relationship, it may be considered that the two users having the social relationship affect each other, or credit scores of the two users having the social relationship may be used as reference of each other. Therefore, the user score optimization module 660 may optimize and adjust the credit score of the target user according to a credit score of another user that belongs to a same social user set and that has a social relationship with the target user, thereby effectively avoiding a problem of inaccurate credit score of the target user caused by that information of the user is collected incompletely or mistakenly. For example, an average value of the credit scores of all other users having the social relationships with the target user is directly used as the optimized and adjusted credit score of the target user, or any value between an average value of the credit scores of all other users having the social relationships with the target user and the initial credit score of the target user is used as the optimized and adjusted credit score of the target user.

Then, in an embodiment, as shown in FIG. 8, the user score optimization module 660 may further include the following units:

A user weight obtaining unit 661 is configured to determine a social weight between each of the other users in the target social user set and the target user according to the social relationship between the target user and the user in the target social user set.

The social weight may be a result of quantifying an intimacy degree of a social relationship between two users. For example, the intimacy degree of the social relationship between the two users is quantified by calculating the quantity of common social friends of the two users, a social group in which the two users jointly participate, a social event in which the two users jointly participate, a frequency of a social event occurring between the two users, or the like, to obtain the social weight between the two users.

A user score optimization unit 662 is configured to: optimize and adjust, according to the social weight between each of the other users in the target social user set and the target user and the credit score of the corresponding user, the credit score of the target user.

If the social relationship between the two users is closer, a probability that the credit scores of the two users are similar is higher. In other words, a credit score of an intimate user of the target user likely reflects the credit score of the target user. Therefore, when the credit score of the target user is optimized and adjusted, an impact factor (the social weight) of the credit score of the intimate user of the target user may be set to a larger value. The user score optimization unit 662 optimizes and adjusts, according to the credit score of each of the other users in the target social user set and the social weight between the user and the target user, the credit score of the target social user set, for example, $q_i = \sum_{k \in Nb(i)} w_{ki} * q_k$ , where $q_i$ is the credit score of the target user, $q_k$ is the credit score of a $k^{th}$

user having the social relationship with the target user, $w_{ki}$ is the social weight between the $k^{th}$ user and the target user,

and $\sum_{k \in Nb(i)} w_{ki} * q_k$ represents a sum of all products of the credit score of each user that is in the target social user set and that has the social relationship with the target user and the social weight between the corresponding user and the target user. This implementation is especially applicable to a situation in which a new target user is added to the target social user set while other users are all optimized and adjusted, so that only target user is separately optimized and adjusted without optimizing and adjusting other users in the target social user set again.

In another embodiment, the user score optimization unit 662 may optimize and iterate, according to the credit scores of the users in a social user set and the social relationships between the users in the social user set, the credit scores of the users in the social user set. A specific iteration procedure may be shown in FIG. 5, and includes: in each iteration, separately using each user in the target social user set as the target user, optimizing and adjusting, according to the social weight between each of the other users in the target social user set and the target user and the credit score of the corresponding user, the credit score of the target user, and stopping the iteration after a difference between the credit score of each user in the target social user set in this iteration and a credit score of the user in a previous iteration is less than a second preset value, so that an obtained credit score of the user is the credit score obtained by means of optimization and adjustment. For example, the user score optimization unit 662 may optimize and adjust the credit scores of the users in the target social user set by using the following formula:

$$q_i^{(r)} = \lambda + (1-\lambda) \sum_{k \in Nb(i)} w_{ki} * q_k^{(r-1)}$$ where $q_i^{(r)}$ is the credit score of an $i^{th}$ user in an $r^{th}$ round of

iteration, $q_k^{(r-1)}$ is the credit score of a user having the social relationship with the $i^{th}$ user in the target social user set in a $(r-1)^{th}$ round of iteration, $w_{ki}$ is the social weight between the user having the social relationship with the $i^{th}$ user in the target social user set and the $i^{th}$ user, $\sum_{k \in Nb(i)} w_{ki} * q_k^{(r-1)}$ represents a sum of all products of the credit score of each user having the social relationship with the $i^{th}$ user in the target social user set and the social weight between the corresponding user and the $i^{th}$ user, and $\lambda$ is a preset damping factor.

It should be noted that the foregoing descriptions are only an example of an iteration algorithm. An algorithm for iterating the credit score of the social user set in this application should not be considered to be limited to the algorithm, and other algorithms such as a heat conduction network iteration algorithm may be applicable.

In this embodiment of this application, the apparatus may further include any one or two of an information push module 670 and a service monitoring module 680:

the information push module 670 is configured to push product information for a user according to the credit score of the corresponding user, that is, push the product information for the corresponding user according to the credit score of the user that is corrected or optimized by using the implementation of this application, for example, push financial product information or fixed assets management product information; and

the service monitoring module 680 is configured to monitor and manage a data service of a user according to the credit score of the corresponding user, that is, monitor and manage the data service of the user according to the credit score of the corresponding user that is corrected or optimized by using the implementation of this application, for example, perform risk management on a loan service of the corresponding user or propose a suggestion on management of current funds of the user.

FIG. 9 is a block diagram of a hardware structure of an optimization apparatus for a credit score of a user according to an embodiment of this application. The apparatus may include a processor 901, a bus 902, and a memory 903. The processor 901 and the memory 903 are interconnected by using the bus 902.

The memory 903 stores a user score obtaining module 610, a set score obtaining module 620, a set relationship obtaining module 630, a set score optimization module 640, a user score correction module 650, a user score optimization module 660, an information push module 670, and a service monitoring module 680.

When being performed by the processor 901, operations performed by the modules stored in the memory 903 are the same as those in the foregoing embodiment, and details are not described herein again.

In this embodiment, after calculating a credit score of a social user set to which a user belongs and optimizing and adjusting the credit score of the social user set according to a social relationship between social user sets, the optimization apparatus for a credit score of a user corrects credit scores of users in the social user set according to the optimized and adjusted credit score of the social user set, and may optimize and adjust the credit scores of the users in the social user set according to a social relationship between the users in the social user set, to optimize the credit scores of the users in combination of information of the social user set. Calculating the credit scores of the users is no longer according to only personal information of the users, so that the accuracy of the credit scores of the users can be effectively increased.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The storage medium may be: a magnetic disk, an optical disc, a read-only memory (ROM), a random access memory (RAM), or the like.

What is disclosed above is merely preferred embodiments of this application, and certainly is not intended to limit the protection scope of this application. Therefore, equivalent variations made in accordance with the claims of this application shall fall within the scope of this application.

**Claims**

1. An optimization method for a credit score of a user, the method comprising:

obtaining initial credit scores of users in multiple social user sets;
obtaining initial credit scores of the social user sets according to the initial credit scores of the users in the social user sets;
determining a social relationship between each two social user sets according to a social relationship between the users in the each two social user sets;
optimizing and adjusting, according to a credit score of at least one social user set having a social relationship with a target social user set and the social relationship between the at least one social user set and the target social user set, a credit score of the target social user set; and
correcting credit scores of the users in the target social user set according to the optimized and adjusted credit score of the target social user set.

2. The optimization method for a credit score of a user according to claim 1, wherein after the correcting credit scores of the users in the target social user set according to the optimized and adjusted credit score of the target social user set, the method further comprises:
optimizing and adjusting, according to a social relationship between a target user and each of other users in the target social user set and the credit scores of the other users in the target social user set, the credit score of the target user.

**3.** The optimization method for a credit score of a user according to claim 1, wherein the optimizing and adjusting, according to a credit score of at least one social user set having a social relationship with a target social user set and the social relationship between the at least one social user set and the target social user set, a credit score of the target social user set comprises:
determining a social weight between each social user set and the target social user set according to the social relationship between the social user set and the target social user set, and optimizing and adjusting, according to the social weight between the at least one social user set and the target social user set and the credit score of the corresponding social user set, the credit score of the target social user set.

**4.** The optimization method for a credit score of a user according to claim 3, wherein the determining a social weight between each social user set and the target social user set according to the social relationship between the social user sets and the target social user set comprises:
determining the social weight between each social user set and the target social user set according to a ratio of users each having a social associated user in the social user sets to the users in the target social user set.

**5.** The optimization method for a credit score of a user according to claim 3, wherein the optimizing and adjusting, according to the social weight between the at least one social user set and the target social user set and the credit score of the corresponding social user set, the credit score of the target social user set comprises:
optimizing and iterating the credit scores of the social user sets; and in each iteration, separately using each of the multiple social user sets as the target social user set, optimizing and adjusting, according to the social weight between the at least one social user set and the target social user set and the credit score of the corresponding social user set, the credit score of the target social user set, and stopping the iteration after a difference between the credit score of each of the multiple social user sets in this iteration and a credit score of the social user set in a previous iteration is less than a first preset value, so that an obtained credit score of the social user set is the credit score obtained by means of optimization and adjustment.

**6.** The optimization method for a credit score of a user according to claim 5, wherein the optimizing and iterating credit scores of the social user sets; and in each iteration, separately using each of the multiple social user sets as the target social user set, optimizing and adjusting, according to the social weight between the at least one social user set and the target social user set and the credit score of the corresponding social user set, the credit score of the target social user set comprises:
iterating the credit score of each of the multiple social user sets by using the following formula:

$$Q_i^{(r)} = \alpha + (1-\alpha) \sum_{k \in Nb(i)} e_{ki} * Q_k^{(r-1)}$$

wherein $Q_i^{(r)}$ is the credit score of an $i^{th}$ social user set in an $r^{th}$ round of iteration, $Q_k^{(r-1)}$ is the credit score of a social user set having the social relationship with the $i^{th}$ social user set in a $(r-1)^{th}$ round of iteration, $e_{ki}$ is the social weight between the social user set having the social relationship with the $i^{th}$ social user set and the $i^{th}$ social user set, $\sum_{k \in Nb(i)} e_{ki} * Q_k^{(r-1)}$ represents a sum of all products of the credit score of each social user set having the social relationship with the $i^{th}$ social user set and the social weight between the corresponding social user set and the $i^{th}$ social user set, and $\alpha$ is a preset damping factor.

**7.** The optimization method for a credit score of a user according to claim 2, wherein the optimizing and adjusting, according to a social relationship between a target user and each of other users in the target social user set and the credit scores of the other users in the target social user set, the credit score of the target user comprises:
determining a social weight between each of the other users in the target social user set and the target user according to the social relationship between the target user and the user in the target social user set, and optimizing and adjusting, according to the social weight between each of the other users in the target social user set and the target user and the credit score of the corresponding user, the credit score of the target user.

8. The optimization method for a credit score of a user according to claim 7, wherein the optimizing and adjusting, according to the social weight between each of the other users in the target social user set and the target user and the credit score of the corresponding user, the credit score of the target user comprises:
optimizing and iterating the credit scores of the users in the target social user set; and in each iteration, separately using each social user in the target social user set as the target user, optimizing and adjusting, according to the social weight between each of the other users in the target social user set and the target user and the credit score of the corresponding user, the credit score of the target user, and stopping the iteration after a difference between the credit score of each user in the target social user set in this iteration and a credit score of the user in a previous iteration is less than a second preset value, so that an obtained credit score of the user is the credit score obtained by means of optimization and adjustment.

9. The optimization method for a credit score of a user according to claim 8, wherein the optimizing and iterating the credit scores of the users in the target social user set; and in each iteration, separately using each user in the target social user set as the target user, optimizing and adjusting, according to the social weight between each of the other users in the target social user set and the target user and the credit score of the corresponding user, the credit score of the target user comprises:
iterating the credit score of each user in the target social user set by using the following formula:

$$q_i^{(r)} = \lambda + (1-\lambda) \sum_{k \in Nb(i)} w_{ki} * q_k^{(r-1)}$$

wherein $q_i^{(r)}$ is the credit score of an ith user in an rth round of iteration, $q_k^{(r-1)}$ is the credit score of a user having the social relationship with the ith user in the target social user set in a (r-1)th round of iteration, $w_{ki}$ is the social weight between the user having the social relationship with the ith user in the target social user set and the ith user, $\sum_{k \in Nb(i)} w_{ki} * q_k^{(r-1)}$ represents a sum of all products of the credit score of each user having the social relationship with the ith user in the target social user set and the social weight between the corresponding user and the ith user, and $\lambda$ is a preset damping factor.

10. The optimization method for a credit score of a user according to claim 1, wherein the correcting credit scores of the users in the target social user set according to the optimized and adjusted credit score of the target social user set comprises:
correcting the credit scores of the users in the target social user set according to an adjustment value for optimizing and adjusting the credit score of the target social user set.

11. The optimization method for a credit score of a user according to claim 10, wherein the correcting the credit scores of the users in the target social user set according to an adjustment value for optimizing and adjusting the credit score of the target social user set comprises:
correcting the credit scores of the users in the target social user set by using the following formula:

$$s_j' = s_j + (Q_i - S_i)$$

wherein $Q_i$ is the optimized and adjusted credit score of the target social user set, $S_i$ is the initial credit score of the target social user set, $s_j$ is the initial credit score of a jth user in the target social user set, and $s_j'$ is the corrected credit score of the jth user in the target social user set.

12. The optimization method for a credit score of a user according to any one of claims 1 to 11, wherein the method further comprises:

pushing product information for a user according to the credit score of the corresponding user; or
monitoring and managing a data service of a user according to the credit score of the corresponding user.

13. An optimization apparatus for a credit score of a user, the apparatus comprising at least a processor and a memory, the memory storing a user score obtaining module, a set score obtaining module, a set relationship obtaining module, a set score optimization module, and a user score correction module, and when being executed by the processor, the user score obtaining module being configured to obtain initial credit scores of users in multiple social user sets; the set score obtaining module being configured to obtain initial credit scores of the social user sets according to the initial credit scores of the users in the social user sets; the set relationship obtaining module being configured to determining a social relationship between each two social user sets according to a social relationship between the users in the each two social user sets; the set score optimization module being configured to: optimize and adjust, according to a credit score of at least one social user set having a social relationship with a target social user set and the social relationship between the at least one social user set and the target social user set, a credit score of the target social user set; and the user score correction module being configured to correct credit scores of the users in the target social user set according to the optimized and adjusted credit score of the target social user set.

14. The optimization apparatus for a credit score of a user according to claim 13, wherein the memory further stores a user score optimization module, and when being executed by the processor, the user score optimization module is configured to: optimize and adjust, according to a social relationship between a target user and each of other users in the target social user set and the credit scores of the other users in the target social user set, the credit score of the target user.

15. The optimization apparatus for a credit score of a user according to claim 13, wherein the set score optimization module comprises a set weight obtaining unit and a set score optimization unit, and when being executed by the processor, the set weight obtaining unit is configured to determine a social weight between each social user set and the target social user set according to the social relationship between the social user set and the target social user set; and the set score optimization unit is configured to: optimize and adjust, according to the social weight between the at least one social user set and the target social user set and the credit score of the corresponding social user set, the credit score of the target social user set.

16. The optimization apparatus for a credit score of a user according to claim 15, wherein when being executed by the processor, the set weight obtaining unit is configured to: determine the social weight between each social user set and the target social user set according to a ratio of users each having a social associated user in the social user sets to the users in the target social user set.

17. The optimization apparatus for a credit score of a user according to claim 15, wherein when being executed by the processor, the set weight optimization unit is configured to: optimize and iterate the credit scores of the social user sets; and in each iteration, separately use each of the multiple social user sets as the target social user set, optimize and adjust, according to the social weight between the at least one social user set and the target social user set and the credit score of the corresponding social user set, the credit score of the target social user set, and stop the iteration after a difference between the credit score of each of the multiple social user sets in this iteration and a credit score of the social user set in a previous iteration is less than a first preset value, so that an obtained credit score of the social user set is the credit score obtained by means of optimization and adjustment.

18. The optimization apparatus for a credit score of a user according to claim 17, wherein when being executed by the processor, the set weight optimization unit is configured to: iterate the credit score of each of the multiple social user sets by using the following formula:

$$Q_i^{(r)} = \alpha + (1-\alpha) \sum_{k \in Nb(i)} e_{ki} * Q_k^{(r-1)}$$

wherein $Q_i^{(r)}$ is the credit score of an $i^{th}$ social user set in an $r^{th}$ round of iteration, $Q_k^{(r-1)}$ is the credit score of a social user set having the social relationship with the $i^{th}$ social user set in a $(r-1)^{th}$ round of iteration, $e_{ki}$ is the social weight between the social user set having the social relationship with the $i^{th}$ social user set and the $i^{th}$ social user set, $\sum_{k \in Nb(i)} e_{ki} * Q_k^{(r-1)}$ represents a sum of all products of the credit score of each social user set having the social relationship with the $i^{th}$ social user set and the social weight between the corresponding social user set and the $i^{th}$ social user set, and $\alpha$ is a preset damping factor.

19. The optimization apparatus for a credit score of a user according to claim 14, wherein the set score optimization module comprises a user weight obtaining unit and a user score optimization unit, and when being executed by the processor,
the user weight obtaining unit is configured to determine a social weight between each of the other users in the target social user set and the target user according to the social relationship between the target user and the user in the target social user set; and
the user score optimization unit is configured to: optimize and adjust, according to the social weight between each of the other users in the target social user set and the target user and the credit score of the corresponding user, the credit score of the target user.

20. The optimization apparatus for a credit score of a user according to claim 19, wherein when being executed by the processor,
the user weight optimization unit is configured to:
optimize and iterate the credit scores of the users in the target social user set; and in each iteration, separately use each user in the target social user set as the target user, optimize and adjust, according to the social weight between each of the other users in the target social user set and the target user and the credit score of the corresponding user, the credit score of the target user, and stop the iteration after a difference between the credit score of each user in the target social user set in this iteration and a credit score of the user in a previous iteration is less than a second preset value, so that an obtained credit score of the user is the credit score obtained by means of optimization and adjustment.

21. The optimization apparatus for a credit score of a user according to claim 20, wherein when being executed by the processor,
the user weight optimization unit is configured to:
iterate the credit scores of the users in the target social user set by using the following formula:

$$q_i^{(r)} = \lambda + (1-\lambda) \sum_{k \in Nb(i)} w_{ki} * q_k^{(r-1)}$$

wherein $q_i^{(r)}$ is the credit score of an $i^{th}$ user in an $r^{th}$

round of iteration, $q_k^{(r-1)}$ is the credit score of a user having the social relationship with the $i^{th}$ user in the target social user set in a $(r-1)^{th}$ round of iteration, $w_{ki}$ is the social weight between the user having the social relationship with the $i^{th}$ user in the target social user set and the $i^{th}$ user, $\sum_{k \in Nb(i)} w_{ki} * q_k^{(r-1)}$ represents a sum of all products of the credit score of each user having the social relationship with the $i^{th}$ user in the target social user set and the social weight between the corresponding user and the $i^{th}$ user, and $\lambda$ is a preset damping factor.

22. The optimization apparatus for a credit score of a user according to claim 13, wherein when being executed by the processor,
the user score correction module is configured to:
correct the credit scores of the users in the target social user set according to an adjustment value for optimizing and adjusting the credit score of the target social user set.

23. The optimization apparatus for a credit score of a user according to claim 22, wherein when being executed by the processor,
the user score correction module is configured to:
correct the credit scores of the users in the target social user set by using the following formula:

$$s'_j = s_j + (Q_i - S_i)$$

wherein $Q_i$ is the optimized and adjusted credit score of the target social user set, $S_i$ is the initial credit score of the target social user set, $s_j$ is the initial credit score of a jth user in the target social user set, and $s'_j$ is the corrected credit score of the jth user in the target social user set.

24. The optimization apparatus for a credit score of a user according to any one of claims 13 to 23, wherein the memory further comprises an information push module and a service monitoring module, and when being executed by the processor,
the information push module is configured to push product information for a user according to the credit score of the corresponding user; or
the service monitoring module is configured to monitor and manage a data service of a user according to the credit score of the corresponding user.

Obtain initial credit scores of users in multiple social user sets

S101

Obtain initial credit scores of the social user sets according to the initial credit scores of the users in the social user sets

S102

Determine a social relationship between each two social user sets according to a social relationship between the users in the each two social user sets

S103

Optimize and adjust, according to a credit score of at least one social user set having a social relationship with a target social user set and the social relationship between the at least one social user set and the target social user set, a credit score of the target social user set

S104

Correct credit scores of the users in the target social user set according to the optimized and adjusted credit score of the target social user set

S105

FIG. 1

Original network: a
social network and
association information

First layer: a relationship
network between
associations

Second layer: a
relationship
network in an
association

FIG.2

Determine a social weight between each two social user sets according to the social relationship between the each two social user sets — 1041

Optimize and iterate credit scores of the social user sets — 1042

Separately use each of the multiple social user sets as a target social user set, and optimize and adjust, according to the social weight between the at least one social user set and the target social user set and the credit score of the corresponding social user set, the credit score of the target social user set — 1043

No — Determine whether a difference between the credit score of each social user set in this iteration and a credit score of the social user set in a previous iteration is less than a first preset value — 1044

Yes

Stop the iteration — 1045

FIG.3

Obtain initial credit scores of users in multiple social user sets — S201

Obtain initial credit scores of the social user sets according to the initial credit scores of the users in the social user sets — S202

Determine a social relationship between each two social user sets according to a social relationship between the users in the each two social user sets — S203

Optimize and adjust, according to a credit score of at least one social user set having a social relationship with a target social user set and the social relationship between the at least one social user set and the target social user set, a credit score of the target social user set — S204

Correct credit scores of the users in the target social user set according to the optimized and adjusted credit score of the target social user set — S205

Optimize and adjust, according to a social relationship between a target user and each of other users in the target social user set and the credit scores of the other users in the target social user set, the credit score of the target user — S206

FIG. 4

Determine a social weight between each two users in the target social user set according to a social relationship between the each two users — 2061

Optimize and iterate the credit scores of the social user sets — 2062

Separately use each user in the target social user set as a target user, and optimize and adjust, according to the social weight between each of other users in the target social user set and the target use and the credit score of the corresponding user, the credit score of the target use — 2063

Determine whether a difference between the credit score of each user in the target social user set in this iteration and a credit score of the user in a previous iteration is less than a second preset value — 2064

No

Yes

Stop the iteration — 2065

## FIG. 5

Optimization apparatus for a credit score of a user

| User score obtaining module — 610 | Set score obtaining module — 620 | Set relationship obtaining module — 630 | Set score optimization module — 640 | User score correction module — 650 | User score optimization module — 660 |

| Information push module — 670 | Service monitoring module — 680 |

## FIG. 6

641
Set weight obtaining unit

642
Set score optimization unit

Set score optimization module

FIG. 7

661
User weight obtaining unit

662
User score optimization unit

User score optimization module

FIG. 8

901
Processor

902
Bus

903
Memory

610
User score obtaining module

620
Set score obtaining module

630
Set relationship obtaining module

640
Set score optimization module

650
User score correction module

660
User score optimization module

670
Information push module

680
Service monitoring module

FIG. 9

# INTERNATIONAL SEARCH REPORT

| International application No. |
| --- |
| **PCT/CN2017/087261** |

**A. CLASSIFICATION OF SUBJECT MATTER**

G06Q 10/06 (2012.01) i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

WPI, EPODOC, CNPAT, CNKI, IEEE, GOOGLE: set, user, credit investigation, group, collective, client, credit, credibility, grade, iterative, optimize, social, familiarity

**C. DOCUMENTS CONSIDERED TO BE RELEVANT**

| Category* | Citation of document, with indication, where appropriate, of the relevant passages | Relevant to claim No. |
| --- | --- | --- |
| PX | CN 106156941 A (TENCENT TECHNOLOGY SHENZHEN CO., LTD.), 23 November 2016 (23.11.2016), claims 1-24 | 1-24 |
| A | CN 105225149 A (TENCENT TECHNOLOGY SHENZHEN CO., LTD.), 06 January 2016 (06.01.2016), description, paragraphs [0029]-[0043] | 1-24 |
| A | CN 105404947 A (ALIBABA GROUP HOLDING LIMITED), 16 March 2016 (16.03.2016), the whole document | 1-24 |
| A | CN 104463603 A (CHINA UNITED NETWORK COMMUNICATIONS CORPORATION LIMITED), 25 March 2015 (25.03.2015), the whole document | 1-24 |
| A | CN 102780683 A (TONGJI UNIVERSITY), 14 November 2012 (14.11.2012), the whole document | 1-24 |
| A | US 2011184977 A1 (DU, J.C. et al.), 28 July 2011 (28.07.2011), the whole document | 1-24 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 July 2017 (25.07.2017) | **25 August 2017 (25.08.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **MA, Xin** Telephone No.: (86-10) **62414428** |
| --- | --- |

Form PCT/ISA/210 (second sheet) (July 2009)

## INTERNATIONAL SEARCH REPORT
### Information on patent family members

| | | International application No. |
|---|---|---|
| | | **PCT/CN2017/087261** |

| Patent Documents referred in the Report | Publication Date | Patent Family | Publication Date |
|---|---|---|---|
| CN 106156941 A | 23 November 2016 | None | |
| CN 105225149 A | 06 January 2016 | WO 2017041664 A1 | 16 March 2017 |
| CN 105404947 A | 16 March 2016 | HK 1221541 A0 | 02 June 2017 |
| CN 104463603 A | 25 March 2015 | None | |
| CN 102780683 A | 14 November 2012 | None | |
| US 2011184977 A1 | 28 July 2011 | CN 101685458 A | 31 March 2010 |
| | | WO 2010037286 A1 | 08 April 2010 |

Form PCT/ISA/210 (patent family annex) (July 2009)

**EP 3 467 730 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610396866